(19) Europäisches Patentamt
European Patent Office
Office européen des brevets

(11) **EP 3 118 976 A1**

(12) **EUROPEAN PATENT APPLICATION**

(43) Date of publication:
**18.01.2017 Bulletin 2017/03**

(51) Int Cl.:
**H02K 7/09** *(2006.01)*         **F16C 32/04** *(2006.01)*
**H02K 3/28** *(2006.01)*

(21) Application number: **15177331.4**

(22) Date of filing: **17.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **UNIVERSITE CATHOLIQUE DE
LOUVAIN
1348 Louvain la Neuve (BE)**

(72) Inventors:
• **DEHEZ, Bruno
  5310 Liernu (BE)**
• **DUMONT DE CHASSART, Corentin
  1450 Gentinnes (BE)**
• **KLUYSKENS, Virginie
  1300 Limal (BE)**
• **BAUDART, François
  6464 Bourlers (BE)**

(74) Representative: **Pecher, Nicolas et al
Pecher & Partners
Rue Louis de Geer, 6
1348 Louvain-la-Neuve (BE)**

(54) **ELECTRIC MACHINE HAVING A RADIAL ELECTRODYNAMIC BEARING**

(57)     The invention provides an electric machine comprising a radial bearing (10,11) for supporting a shaft of said electric machine, comprising an inductor (40) having an inductor axle (30), generating a magnetic field having p pole pairs, p being equal to or larger than 1; a motor/generator armature winding (170) having turns (100) arranged around an armature axis (35), magnetically coupled to said magnetic field, and connected to a source in such a manner that a torque is produced when a current is fed into said motor/generator armature winding (170) when said electric machine is a motor or connected to a load in such a manner that a current is produced in said load when said inductor is rotated, when said electric machine is a generator; a bearing armature winding (70) having turns (100) disposed around said armature axis (35), magnetically coupled to said magnetic field, and connected in a closed circuit in such a manner that the net flux variation intercepted by said armature winding (70) when said inductor (40) and said armature winding (70) are in rotation with respect to each other is zero when said inductor axle (30) and said armature axis (35) coincide and is different from zero when said inductor axle (30) and axis (35) do not coincide; a gap (50) between said inductor (40) and said winding (70). Said bearing armature winding (70) comprises p-1 or p+1 pole pairs. In a preferred embodiment, the two windings are combined in one multifunction winding.

Fig. 3a

**Description**

**Field of the invention**

The invention relates to an electric rotating machine having a radial magnetic bearing for supporting without contact the rotor of said machine.

**Description of prior art**

Active magnetic bearings are known from many documents. A radial magnetic bearing is known from EP2677176. The rotor of the electric motor is levitated in a contactless manner. The rotor position is monitored by sensors. A control unit commands currents in windings of the magnetic bearing in order to bring the rotor back to its nominal position. These active magnetic bearings require sensors, power supplies for providing the currents and complex command electronics or software for controlling the currents according to the rotor position. Document US 20120068558 discloses a bearingless switched reluctance motor. In this motor also, the intensities and directions of currents flowing in the suspending/suspension windings must be controlled precisely according to the rotor position.

Document WO2014013147 discloses an electric machine having two magnetic bearing motors angularly offset in relation to one another. Also here, the stator winding currents must be controlled according to the rotor position in order to center the rotor.

Document WO2013110608 discloses an electric machine having main bearings, designed to support a rotor with respect to a stator in a main range of speeds, and secondary bearings designed to support the rotor with respect to the stator when one or all the main bearings fail. The secondary bearings are passive electrodynamic bearings comprising at least one permanent magnet fixed to the stator and an electrically conducting element fixed to the rotor. Auxiliary bearings provide support at low speed when the secondary bearings become ineffective. The main bearings are active magnetic bearings. Both the main bearings and the secondary bearings are located on both sides of the rotor shaft of the electric machine. Because of this plurality of bearings on both sides of the machine, the machine, and the supporting shaft is long, and there will be a risk of vibrations especially at high speeds.

Passive electrodynamic bearings are based on forces issued from the interaction between a magnetic field and currents induced in conductors resulting from a variation of the magnetic field seen by these conductors. This variation results from a time variation of the magnetic field or by a space variation of the field and a relative motion of the conductor. Preferably, the currents will only be induced when the rotor is not in its equilibrium position: the fact that no current flows in the conductors when the rotor is in equilibrium implies that there are no losses in this situation. These bearings are known as null-flux windings. Passive electrodynamic bearings offer the possibility to design passive magnetic bearings at room-temperature. However, the forces they develop depend on the rotor speed, which means that there are no forces when the rotor does not move. A passive radial bearing is known from WO2015024830. This document discusses the structure of the winding for obtaining a good stiffness. However this document does not disclose an electrical machine in combination with a passive radial bearing.

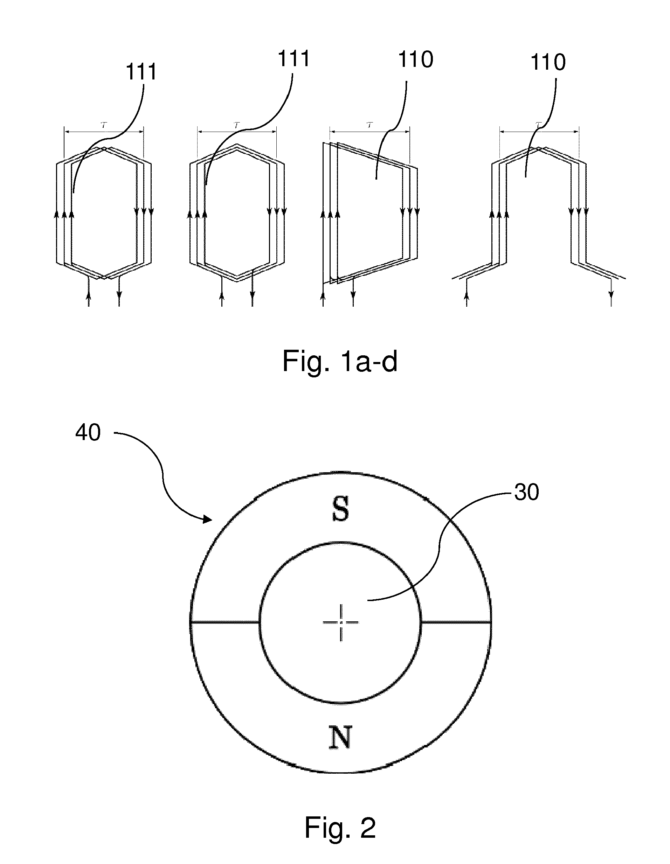

A passive magnetic bearing for a motor or generator is known from document WO03021121. In this document, the number of pairs of poles of the inductor magnet of the rotor 17 is equal to the number of pairs of poles of the bearing winding (12, 33, 13), namely 6 in the example of Fig. 1. The motor/generator windings 25 are disposed in radial planes while the bearing windings (12, 33, 13) are along a cylinder coaxial with the stator axis 22 . This condition is necessary in order to have no mutual inductance between the bearing winding and the motor/inductor winding. However, in order to meet this requirement, the design of both windings is far from efficient: while the radially external part of loops 25 subject to a radial field have a positive motor/generator effect, the radially inwards branch of loops 25, subject to a radial field of lower intensity have a motor/generator effect counteracting the first effect, and resulting in a lower net effect; the bearing winding must be located at a radius in the middle of loops 25, and therefore, being far away from the magnet array 27, have a reduced stabilizing effect. Moreover, while the arrangement and support of the motor/generator and bearing windings is not described in this document; it appears that making such a combination is not a simple task.

**Summary of the invention**

It is an object of the present invention to provide a compact electric machine combining efficiently a passive radial electrodynamic bearing and a generator/motor winding.

The invention is defined by the independent claims. The dependent claims define advantageous embodiments.

According to a first aspect of the invention there is provided an electric machine comprising a radial bearing for supporting a shaft of the electric machine, comprising

a) an inductor having an inductor axle, generating a magnetic field having p pole pairs, p being equal to or larger than 1;

b) a motor/generator armature winding having turns or loops arranged around an armature axis, magnetically coupled to said magnetic field, and connected to a source in such a manner that a torque is produced when a current is fed into said motor/generator armature winding when said electric machine is a motor or connected to a load in such a manner that a current is produced in said load when said inductor is rotated, when said electric machine is a generator;
c) a bearing armature winding having turns or loops disposed around said armature axis, magnetically coupled to said magnetic field, and connected in a closed circuit in such a manner that the net flux variation intercepted by said armature winding when said inductor and said armature winding are in rotation with respect to each other is zero when said inductor axle and said armature axis coincide and is different from zero when said inductor axle and axis do not coincide;
d) a gap between said inductor and said winding.

According to the invention, said bearing armature winding comprises p-1 or p+1 pole pairs.

When p=1 the bearing armature winding may comprise two pole pairs.

Preferably, said inductor is internal to said bearing armature winding and said bearing armature winding comprises p+1 pole pairs.

Alternatively, said inductor is external to said bearing armature winding and said bearing armature winding comprises p-1 pole pairs.

Preferably, said motor armature winding has p pairs of poles and is disposed along a cylinder around said armature axis.

In a preferred embodiment of the invention, said motor armature winding extends axially along a first portion of said armature axis and said bearing armature winding extends along a second portion of said armature axis, said first and second portion having at least a partial overlap.

In said embodiment, the bearing armature winding may comprise two or more sections extending along said second portion of said armature axis where vibration antinodes and/or displacements may occur when said inductor axle is in rotation.

In said embodiment, said first portion and said second portion may advantageously coincide.

In another preferred embodiment of the invention, the motor/generator armature winding may be obtained by adding connectors to the bearing armature winding, thereby forming a multifunction winding.

In first form of multifunction winding, wherein said inductor has one pole pair (p=1), said bearing armature winding is a lap winding and has two pole pairs (q=2), said motor/generator armature winding is formed by the coils of said bearing armature winding by adding a start connector Rs to the first turn of a first coil and a finish connector $R_F$ to the first turn of a second coil of the bearing armature winding, said first coil being located at 180° of said second coil, said start connector Rs and finish connector $R_F$ being connected to a load or source.

In second form of multifunction winding, wherein said inductor has two pole pairs (p=2), said bearing armature winding is a lap winding and has one pole pairs (q=1) comprising two coils connected successively in antiseries, said motor/generator armature winding is formed by the coils of said bearing armature winding by adding a start connector Rs to the first turn of a first coil and a finish connector $R_F$ to the last turn of a second coil of the bearing armature winding, said first coil being located at 180° of said second coil, said start connector Rs and finish connector $R_F$ being connected to a load or source.

In third form of multifunction winding, wherein said inductor has two pole pairs (p=2), said bearing armature winding is a lap winding and has one pole pairs (q=1) comprising four coils connected successively in series, antiseries, series, antiseries, said motor/generator armature winding is formed by the coils of said bearing armature winding by adding a start connector Rs to a conductor connecting two coils connected in series, and a finish connector $R_F$ to a conductor connecting the two other coils connected in series of the bearing armature winding, said start connector Rs and finish connector $R_F$ being connected to a load or source.

In the electric machine of the invention, the rotor may be embedded in a cylindrical sleeve.

The bearing armature winding may comprise two sections located at both ends of said second portion, or three sections located at both ends of said second portion and in the middle of said section.

In the context of the present invention, it is to be understood that "winding magnetically coupled to the magnetic field of an inductor" means that at least a part of the magnetic field produce a flux across a surface of the winding.

## Short description of the drawings

These and further aspects of the invention will be explained in greater detail by way of example and with reference to the accompanying drawings in which:

Fig.1 a-d  are schematic representations of the different types of coils that may be used in generator/motor armature winding or in bearing armature winding in an electric machine according to the invention;

| Fig.2 | is a schematic representation of an axial section of a permanent magnet (PM) inductor having one pair of poles (p=1); |
|---|---|
| Fig.3a, 3b, and 3c | are schematic representations of bearing armature windings having each two (p+1) pairs of poles for embodiments of electric machines according to the invention having a one-pair of poles inductor (p=1); |
| Fig.4a, 4b and 4c | are schematic representations of motor/generator armature windings for embodiments of electric machines according to the invention having a one-pair of poles inductor (p=1); |
| Fig.5 | is a schematic representation of an axial section of a PM inductor having two pairs of poles (p=2); |
| Fig.6a and 6b | are schematic representations of bearing armature windings having three (p+1) pairs of poles, for embodiments of electric machines according to the invention having a two-pairs of poles inductor (p=2); |
| Fig.7a, 7b and 7c | are schematic representations of bearing armature windings having one (p-1) pairs of poles, for embodiments of electric machines according to the invention having a two-pairs of poles inductor (p=2); |
| Fig.8a and 8b | are schematic representations of motor/generator armature windings for embodiments of electric machines according to the invention having a two-pairs of poles inductor (p=2); |
| Fig.9a, 9b and 9c | are schematic representations of multifunction armature windings, for preferred embodiments of electric machines according to the invention; |
| Fig.10 | is an equivalent electric circuit representing a schematic representation of one phase of a multifunction armature winding according to Fig.9a or 9b. |
| Fig.11a-f | are schematic representations of possible deformation modes or displacement modes of an axle of an electric machine of the invention. |
| Fig.12a | is a schematic representation of an axial section along the axle of an electric machine according to an embodiment of the invention. |
| Fig.12b | is a schematic representation of an axial section along the axle of an embodiment of the invention similar to the one of Fig.12a, having additional axial and radial bearings. |
| Fig.12c | is a schematic representation of an axial section along the axle of an embodiment of the invention similar to the one of Fig.12a, wherein the bearing armature winding is segmented in different sections along the axle. |

The drawings of the figures are neither drawn to scale nor proportioned. Generally, identical components are denoted by the same reference numerals in the figures. All winding configurations are represented as unwound on a flat surface, but are actually cylindrically configured, the right hand side of the drawings being adjacent to the left hand side of the drawing. In all these drawings, the letters "N" and "S" represent the North Pole and the South Pole respectively of the magnetic field produced by the inductor. Arrows on the winding conductors indicate a current direction in the windings, and a diagram showing the corresponding radial magnetic field generated by these currents is shown below the winding.

## Detailed description of embodiments of the invention

Fig.1 is a schematic representation of different types of coils 110 that may be used for generator/motor armature windings or for bearing armature windings in an electric machine according to the invention. As known in the art, a winding may comprise a plurality of coils 110, and a coil 110 may comprise one turn 111 (single turn coil) or more turns (multi-turn coil). A turn 111 may extend along a coil span T. When the winding is wound as a cylinder, the coil span T may be expressed as an azimuthal angular extension. The coil span may be equal to the inductor pole pitch, or smaller. Fig.1 a represents a lap coil 110 having three turns 111. Each turn may be displaced azimuthally by a distance with respect to a previous turn. In Fig 1 b, the plurality of turns 111 are wound concentrically. The lap coils of Fig 1 a and 1 b are shaped as hexagons, but other shapes such as a trapezoidal shape shown in Fig. 1 c may be used. Wave windings such as shown in Fig. 1 d may also be used. As well known in the art, the windings using these coils may be installed in slots, or may form slotless or airgap windings. The conductors forming the coils may be wires or rods. Slotless windings may be formed as flexible PCBs. These coils are building blocks for forming the windings. A plurality of coils, at a distance called coil pitch, are connected in series as discussed in detail below.

Fig.2 is a schematic representation of an axial section of a PM inductor 40 having one pair of poles (p=1). The inductor 40 has a north pole N and a south pole S and is arranged for rotation around an inductor axle 30. This inductor is a one-pair-of-poles inductor i.e. having p=1. The magnetic field is mainly radial in front of the poles. The inductor may be made of permanent magnets, as shown, but may also be made of winding wherein currents are circulated.

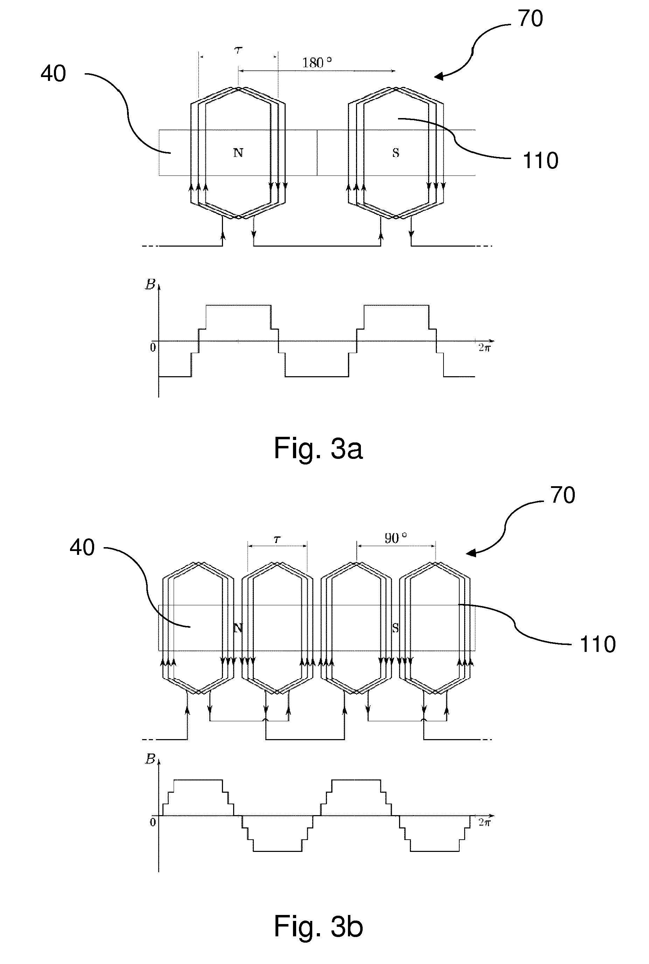

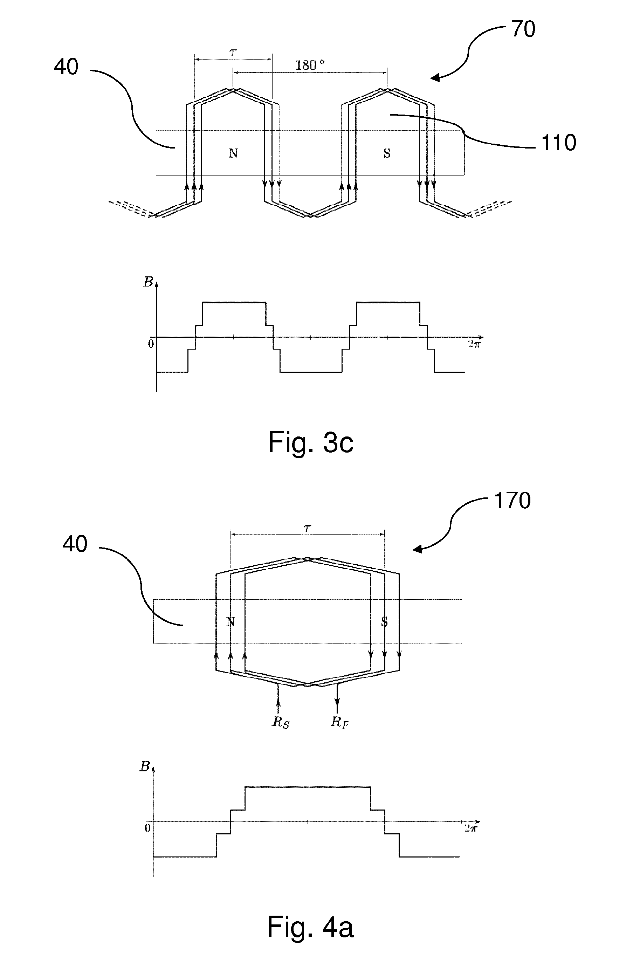

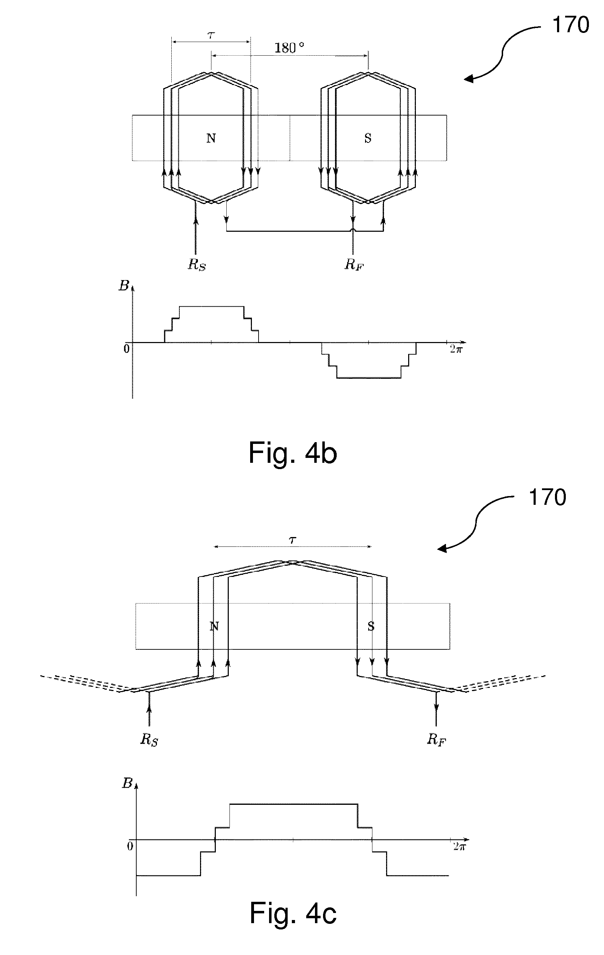

Fig.3a, 3b and 3c are schematic representations of bearing armature windings 70 for embodiments of electric machines according to the invention having a one-pair of poles inductor (p=1). These windings are obtained by arranging coils of Fig. 1 so as to form a closed loop. The poles of the inductor 40 are represented as N and S. A representation of the magnetic field B produced by a current flowing in the winding along the direction of the arrows is represented below the winding. This corresponds to a two-pairs of pole winding, in all three figures. As can be seen, one of the north poles of the winding face the north pole of the inductor, while the other north pole of the winding faces a south pole of the inductor, resulting, when the rotor is centred, in a null net flux of the inductor field in the bearing winding. In the winding of Fig. 3a, the two successive coils are at a distance (coil pitch) of 180°. The coils are connected in series so as two form a closed loop, with currents in one coil flowing in the same direction as the currents in the other coil. In the winding of Fig. 3b, 4 coils, having a span less than or equal to 90° and separated by a coil pitch of 90°, are connected in anti-series, i.e. in such a way that the current flowing in one coil are flowing in the opposite direction in a subsequent coil. Fig. 3c is an example of a two-pole bearing winding using a three-turns wave winding.

Fig.4a, 4b and 4c are schematic representations of one phase motor/generator armature windings 170 for embodiments of electric machines according to the invention having a one-pair of poles inductor (p=1). All three examples show armature windings 170 having one pair of poles, i.e. matching the number of pairs of poles of the inductor, producing a maximal interaction between the inductor and the winding. All three examples show a start connector Rs and a finish connector $R_F$ for feeding currents (motor) or taking currents (generator). In Fig. 4b, the two successive coils are connected in anti-series. In Fig. 4c, the three wave turns are connected in series so as to close the loop on the feeding connectors Rs and $R_F$.

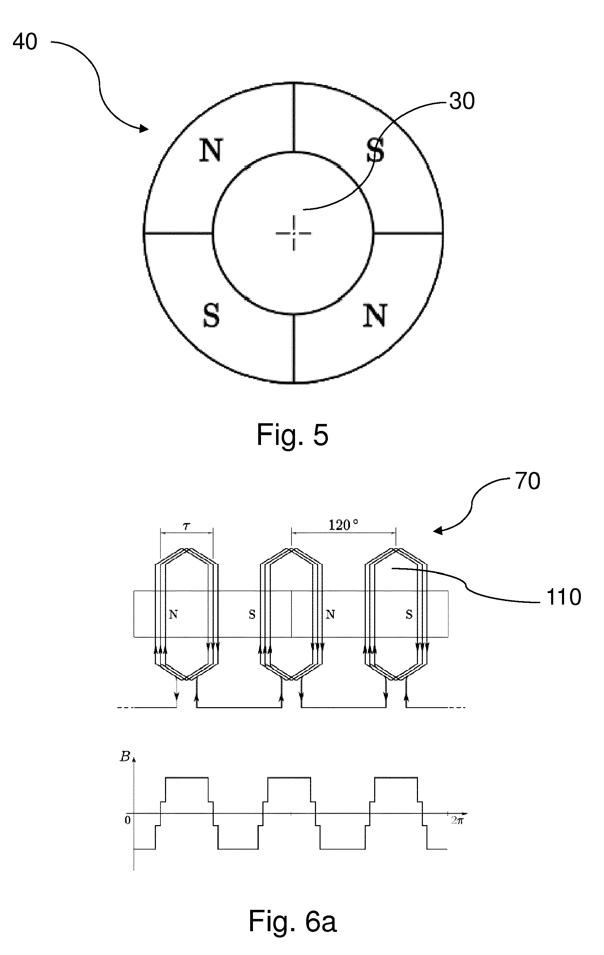

Fig.5 is a schematic representation of an axial section of a PM inductor having two pairs of poles (p=2). This inductor may be made of permanent magnets, as shown, but may also be made of winding wherein currents are circulated. A set of examples of bearing armature windings and motor/generator armature windings adapted for such a two-pairs of poles inductor will now be described.

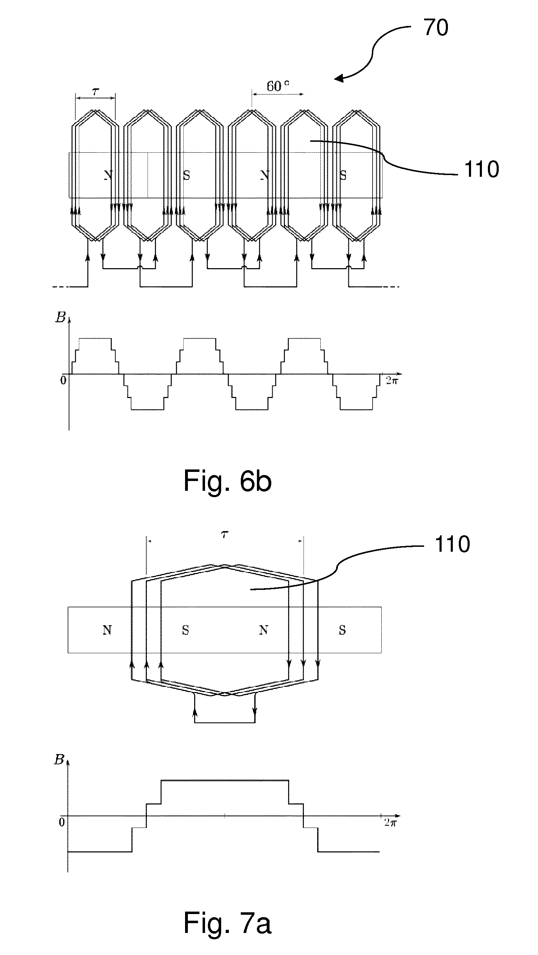

Fig.6a and 6b are schematic representations of bearing armature windings 70 having three (p+1) pairs of poles, for embodiments of electric machines according to the invention having a two-pairs of poles inductor (p=2). In the example of Fig. 6a, three lap coils 110, each having a coil span T lower than or equal to 60° and separated by a coil pitch of 120°, interconnected in series so as to form a closed loop are represented. In the example of Fig. 6b, six lap coils 110, each having a coil span T lower than or equal to 30° and separated by a coil pitch of 60° are connected in anti-series (so as to form a closed loop). When these windings are in rotation relative to the two-pairs-of pole inductor, and centred and aligned with respect to the inductor, the net magnetic flux of the inductor magnet across the winding is zero. As is well known, e.g. from document WO2015024830, when the winding is decentred of misaligned, the magnetic flux will be nonzero, and currents will be generated in the winding, having the effect of recentring or realigning the winding.

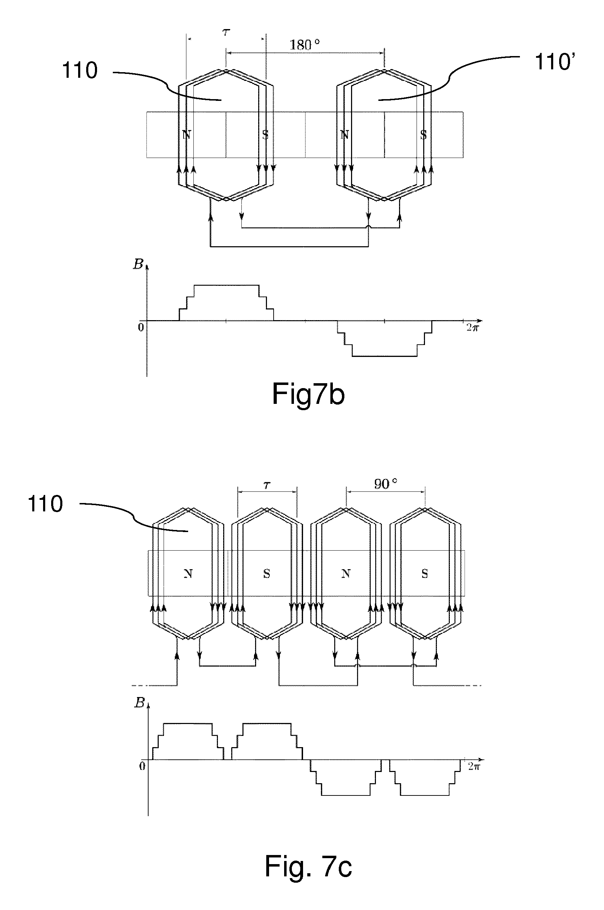

Null flux windings having one more pairs of poles than the inductor (i.e. q=p+1) have been discussed heretofore. Null flux windings may also be produced having one pair of poles less than the inductor (i.e. q=p-1). This becomes possible for inductors having two or more pairs of poles at the inductor. In Fig. 7a, a single closed coil 110 forms a one pair of poles winding. As can be seen from the figure, the magnetic flux into the coil is from the south pole of the inductor at the left part of the figure and from the north pole of the inductor at the right part of the figure. These two contributions cancel so that the net flux is zero. This remains true if the coil is rotated with respect to the inductor. This condition may become false when the bearing armature winding is offset or misaligned with respect to the inductor. The net flux in the bearing winding is then non-zero, and a current is generated in the bearing winding resulting from the time-variation of this magnetic flux. The effect of this current, interacting with the inductor field, is to recenter or realign the bearing armature winding with respect to the inductor. Fig. 7b, is also a one-pair-of-poles bearing armature winding, having two coils 110, 110' interconnected in antiseries. Fig. 7c is another example where four coils are connected successively in series, antiseries, series and antiseries so as to form together a one-pair-of poles winding. In this context, we consider that two successive coils are connected in series if currents in corresponding conductors flow in the same direction, and in antiseries if currents in corresponding conductors flow in opposite directions.

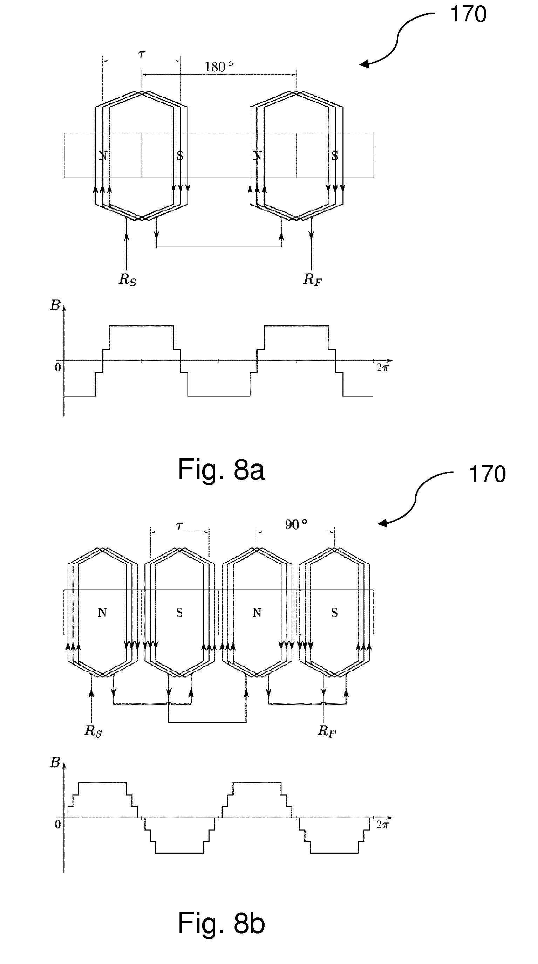

Fig.8 a and b are schematic representations of one phase of a motor/generator armature windings for embodiments of electric machines according to the invention having a two-pairs of poles inductor (p=2). The two examples show armature windings 170 having two pairs of poles, i.e. matching the number of pairs of poles of the inductor, producing a maximal interaction. The two examples show a start connector Rs and a finish connector $R_F$ for feeding currents (motor) or taking currents (generator). In Fig. 8b, the four successive coils are connected in anti-series. Other interconnections of the successive coils are possible, provided the currents flowing in the coils have the directions shown by the arrows.

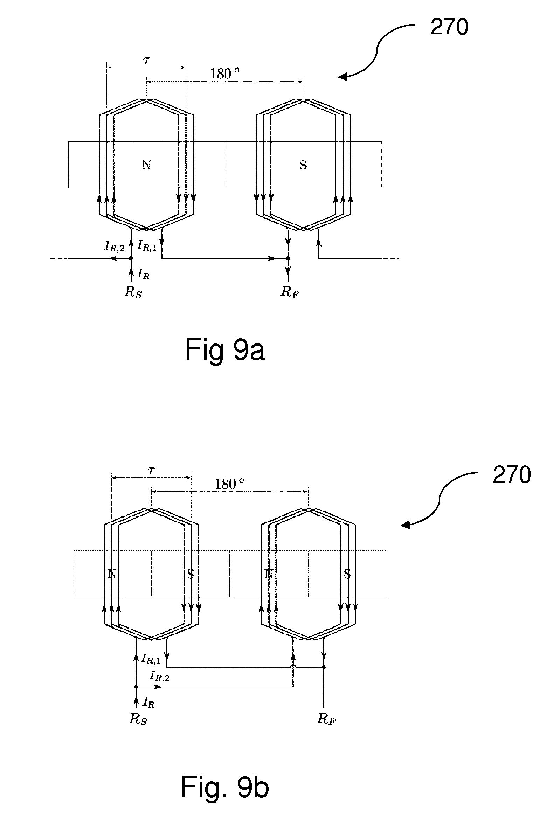

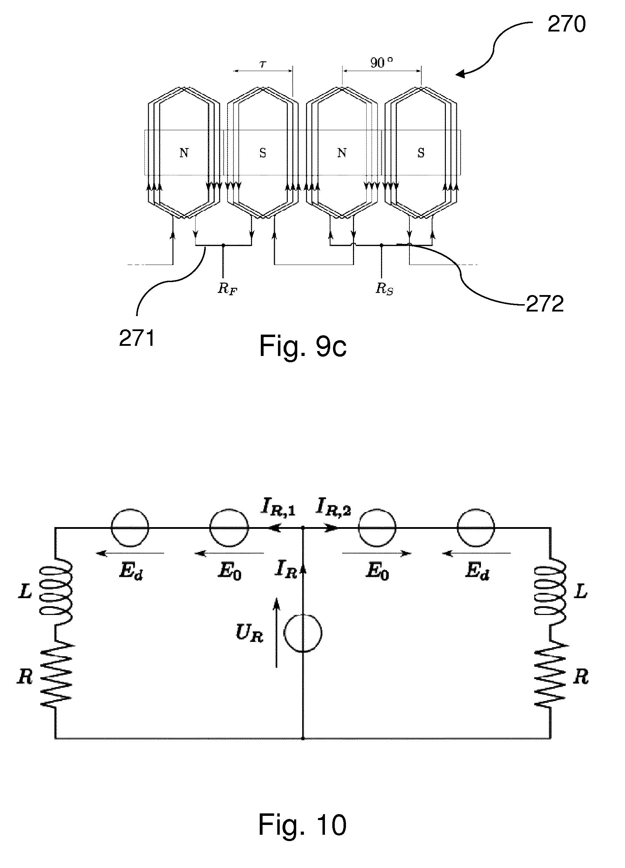

Fig.9a, 9b and 9c are preferred embodiments of the invention where a single multifunction winding 270 performs both the function of the bearing armature winding and of the motor/generator armature winding. The multifunction winding of Fig. 9a is obtained by adding a start connector Rs to the first turn of a coil and a finish connector $R_F$ to the first turn of the other coil to the bearing armature winding 70 of Fig. 3a. The start connector Rs and the finish connector $R_F$ are used for feeding a current $I_1$ when the electric machine is a motor and for receiving a current $I_1$ when the electric machine is a generator. Current $I_1$ is divided in currents $I_{1,1}$ and $I_{1,2}$ flowing into the two coils, i.e.

$$I_1 = I_{1,1} + I_{1,2}$$

When $I_1$ is zero, i.e. when the motor is not powered, or the generator is not loaded, currents $I_{1,1}$ and $I_{1,2}$ may result from a rotor being decentered and are then equal and opposite. In this arrangement, if the current $I_{1,1}$ flowing in the first coil flows in the same direction as a current flowing in the winding as a result of decentring or misalignment, then the current $I_{1,2}$ flowing in the second coils flows in the direction opposite to said decentring or misalignment current. It can be seen on Fig. 9a that the currents $I_{1,1}$ and $I_{1,2}$ form a first and second pole of a one-pair-of poles winding, interacting as motor or generator with the one-pair-of-poles inductor.

Similarly, a multifunction bearing (not represented) can be formed by adding a start connector Rs and a finish connector $R_F$ at the two first conductors of two coils located at 180° from each other to the winding of Fig. 3b.

Similarly, the multifunction winding of Fig. 9b is obtained by adding a start connector Rs to the first turn of a coil and a finish connector $R_F$ to the last turn of the other coil to the bearing armature winding 70 of Fig. 7b. With this arrangement, if the current $I_{1,1}$ flowing in the first coil flows in the same direction as a current flowing in the winding as a result of decentring or misalignment, then the current $I_{1,2}$ flowing in the second coils flows in the direction opposite to said decentring or misalignment current. It can be seen on Fig. 9c that the currents $I_{1,1}$ and $I_{1,2}$ form two a two-pairs-of poles winding, interacting as motor or generator with the two-pairs-of-poles inductor.

Fig. 9c represents a multifunction winding 270 built upon the bearing winding of Fig. 7c. by adding a start connector Rs to a wire 271 connecting the first group of two coils in series and a finish connector $R_F$ to a wire 272 connecting the second group of two coils in series.

Fig.10 is a schematic representation of an equivalent electric circuit representing one phase of a multifunction armature winding according to Fig.9a or 9b. The left and right branches or the circuit correspond respectively to the left and right coils of said winding. Both branches have the same resistance R, and inductance L. They are the seat of electromotive forces Eo and $E_d$. The voltage source $U_R$ corresponds to the external electric supply feeding the motor when the electric machine is a motor, or to the voltage applied on the electric load connected to the electric machine when it is a generator.

Eo is the electromotive force induced by the component of the magnetic field generated by the inductor in the armature windings when the rotor is centred. This magnetic field component, and therefore the electromotive force Eo, does not depend on the decentring amplitude. As the component of the magnetic field generated by the inductor on the armature windings when the rotor is centred has one pair of poles, the left coil faces a North Pole produced by the inductor 40 when the right coil faces a south pole produced by the same inductor 40. It follows that the electromotive force Eo is opposite in sign in the left and right coils, as illustrated on Fig. 10. $E_d$ is the electromotive force induced by the component of the magnetic field appearing on the armature windings when the rotor is not centred. Considering that the rotor decentring amplitude is small (compared to the air gap thickness), this magnetic field component, and therefore the electromotive force $E_d$, is proportional to the decentring amplitude. As the component of the magnetic field generated by the inductor on the armature winding when the rotor is not centred has two pairs of poles, the left and right coils face a North Pole produced by the inductor 40 at the same time. It follows that the electromotive force $E_d$ has the same sign in the left and right coils.

The electrical equations of the equivalent electric circuit of fig. 10 are

$$U_R+E_0+E_d-RI_{R,1}-j\omega LI_{R,1} = 0$$

$$U_R+E_0-E_d-RI_{R,2}-j\omega LI_{R,2} = 0$$

$$I_R = I_{R,1}+I_{R,2}$$

As a result, when the rotor is centred, $E_d = 0$ and

$$I_{R,1} = I_{R,2} = (U_R+E_0)/(R+j\omega L)$$

$$I_R = 2(U_R+E_0)/(R+j\omega L)$$

The current $I_{R,1} = I_{R,2}$ circulating in the left and right coils only contributes to the torque generation on the rotor, but not to the restoring force. When the rotor is not centred, $E_d \neq 0$ and

$$I_{R,1} = (U_R + E_0)/(R + j\omega L) + E_d/(R + j\omega L)$$

$$I_{R,2} = (U_R + E_0)/(R + j\omega L) - E_d/(R + j\omega L)$$

$$I_R = 2(U_R + E_0)/(R + j\omega L)$$

The additional current component due to the decentering in the left and right coils only contributes to the generation of a restoring force, but not a torque.

This is consistent with the fact that the current $I_R$ delivered by the external source $U_R$ remains unchanged.

This preferred embodiment is especially advantageous because less material is needed for the winding.

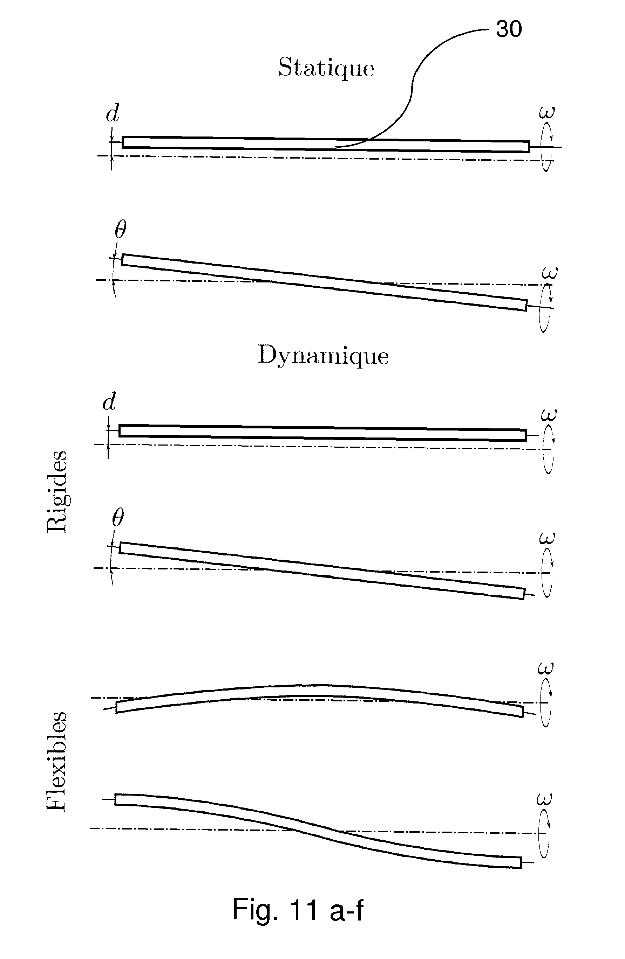

Fig.11a-f are schematic representations of possible displacement modes or deformation modes of an axle of an electric machine of the invention.

Fig. 11a-f illustrates different static and dynamic displacements and deformations. In Fig. 11 a, the axle 30 is not deformed but is decentred and rotates at a fixed position at a distance of its nominal position, parallel to this nominal position. In Fig. 11 b, the axle is also not deformed but is misaligned and rotates at a fixed angular distance $\theta$ from its nominal position. Fig. 11a-b are static deformations and do not generate vibrations as the axle rotates at a fixed position. In Fig. 11c, the axle 30 is not deformed but decentred and rotates at a fixed distance of its nominal position, parallel to this nominal position, around this nominal position, in a cylindrical way. In Fig. 11d, the axle is also not deformed but misaligned and rotates at a fixed angular distance $\theta$ from its nominal position, in a conical way around its nominal position. In Fig. 11e, the axle is bent and rotates around its nominal position, with two nodes. In

Fig. 11 f, the axle is bent and rotates around its nominal position, with a single node. Fig. 11 c -f are dynamic deformations as the axle rotates around its nominal undistorted position. These displacements and deformations may generate vibrations at specific rotation speeds know as critical speeds. These vibrations may be a problem, especially at high speeds, and with long axles.

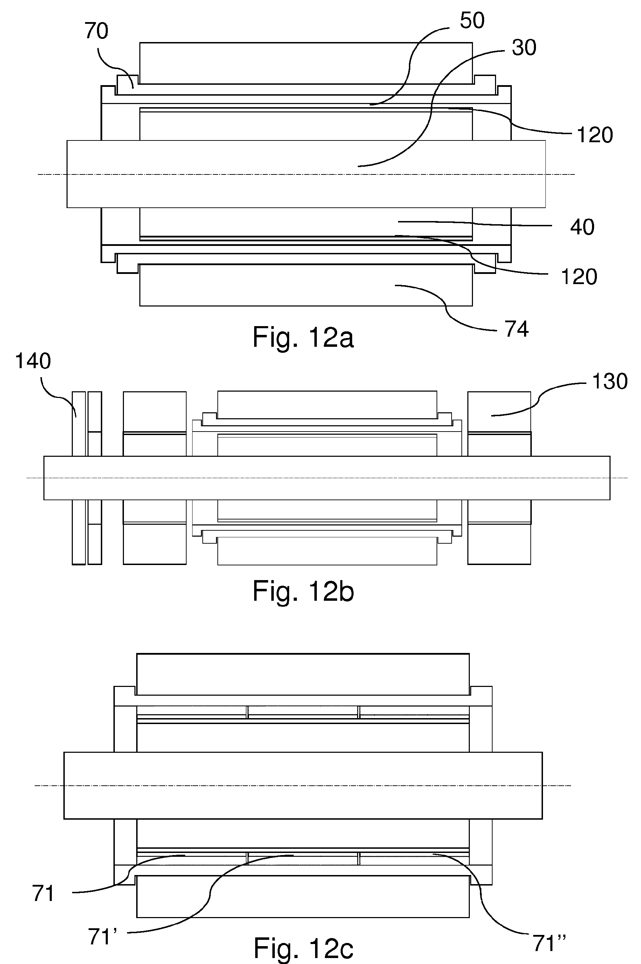

Fig.12a is a schematic representation of an axial section along the axle of an electric machine according to an embodiment of the invention. At the rotor, the inductor axle 30 supports an inductor 40. This inductor may typically be an arrangement of permanent magnets, such as a Halbach array, producing a magnetic field having p pairs of poles, i.e. a magnetic field whose main spatial component has an angular periodicity equal to $2\pi/p$. A sleeve 120 may be provided around the inductor 40, and perform the function of supporting and maintaining inductor 40, especially at high rotation speeds. At the stator 60, a bearing armature winding 70 is provided. This bearing armature winding 70 may extend along the length of the electrical machine. A conventional motor/generator winding 170 is provided also along the length of the electrical machine. Although the motor/generator winding 170 is represented radially outwards of the bearing armature winding 70, the two windings may be in a different order. They may also be combined as a single multifunction winding as discussed above in relation to Fig. 9a, 9b and 9c. A ferromagnetic yoke 74 may provide a return path for the magnetic field. An air gap 50 between the rotor and the stator 60 allows rotation of the rotor when the rotor is properly centred. Although the motor/generator winding 170 and the bearing armature winding 70 are shown as overlapping on the full axial extent of the electrical machine, the overlap may be only partial, according to the needs of the application.

Fig.12b is a schematic representation of an axial section along the axle of an embodiment of the invention similar to the one of Fig.12a, having additional axial 130 and radial 140 bearings. These additional axial and radial bearings may be conventional mechanical bearings and cooperate with the bearing armature winding for providing support and stability in a wide range of speed and load conditions. In this particular case, the bearing winding may provide an efficient support at high speed, especially for countering the apparition of vibration with long axels

The problem of vibrations at critical speeds of rotating electrical machines may be solved with a preferred embodiment of the invention represented at Fig. 12c. The machine of Fig. 12c is similar to the machine of Fig. 6, with the difference that the bearing armature winding 70 is divided in three independent sections 71, 71', and 71" extending along part of the axle. Each of these sections 71, 71', and 71', has a shape similar to the winding of Figs. 3, 6 or 7, i.e. is a closed null-flux winding. The advantage of this design is that each section is active (i.e. performs a bearing function) or not depending on the local decentring or deformation of the axle. Therefore the sections will produce a centring effect at the location of the decentring. As an example, if the situation of Fig. 11 a, all three sections will tend to bring back the axle to its nominal position. In the situation of Fig. 11 b, section 71 and 71', will tend to rotate the axle back to its nominal position, while the central section 71' will have no effect. The example of Fig. 12c shows a bearing armature winding 70 having three sections 71, 71' and 71 ", any number of sections may be chosen and located according to the needs of the application. Sections may be preferentially located at the antinodes of vibration modes, i.e. at the middle of the axle in the case of Fig. 11e, and at both ends of the axle in the case of Fig. 11f.

Electric machines of the invention provide an increased reliability, and a more compact design. In particular, the preferred embodiment of the multifunction winding is a very compact solution.

The present invention has been described in terms of specific embodiments, which are illustrative of the invention and not to be construed as limiting. More generally, it will be appreciated by persons skilled in the art that the present invention is not limited by what has been particularly shown and/or described hereinabove. More specifically, the examples show a central inductor, with the bearing and motor/generator winding outside of it, but the inductor may also outside a central bearing and motor/generator winding. As is known, in the former case, the solution with q=p+1 is preferred, while in the latter case, the solution with q=p-1 is preferred. The solution where the inductor is rotating while the windings are static is preferred, but the other solution is also applicable according to the invention. Also, all examples show one phase windings for the bearing armature windings, for the motor/generator armature windings and for the multifunction windings. An increased effect may be obtained by providing a larger number $n_\varphi$ of phases, each individual winding of the multi-phase winding being offset by an angle of 360/ $(p.n_\varphi)$ with respect to a subsequent winding of such a multi-phase winding. Windings having two or more phases may also have the advantage that the torque/current produced is more regular for a motor/generator winding, and the centering effect is more regular for a bearing winding. This reduces the risk of oscillations. The interconnection of successive coils of the windings shown in the examples is the most straightforward interconnection mode, but other interconnection modes between coils may be contemplated provided that the directions of the currents flowing in the coils remains the same as the directions shown by the arrows on the figures. More specifically, the multifunction windings may be interconnected in such a way that the currents generated therein flow in the same direction as in the corresponding bearing winding, and that the motor/generator currents flow in the same direction as in the corresponding motor/generator winding. The figures represent turns as single lines, but this does not limit the invention to the case where each of these lines is a single conductor. As well known in the art of electrical machine windings, a turn may represent a plurality of conductors wherein same current flows, located in the same slot or position.

Reference numerals in the claims do not limit their protective scope. Use of the verbs "to comprise", "to include", "to be composed of", or any other variant, as well as their respective conjugations, does not exclude the presence of elements other than those stated. Use of the article "a", "an" or "the" preceding an element does not exclude the presence of a plurality of such elements.

The invention may also be described as follows: the invention provides a radial bearing for supporting a shaft of a rotating device comprising a) an inductor having an inductor axis, generating a magnetic field having p pole pairs; b) an armature winding having loops disposed around an armature axis, magnetically coupled to said magnetic field, and connected in a closed circuit in such a manner that the net flux variation intercepted by said armature winding when said inductor and said armature winding are in rotation with respect to each other is zero when said inductor axis and said armature axis coincide and c) a gap between said inductor and said armature winding. The armature winding comprises p-1 or p+1 pole pairs when p is larger than or equal to 1 and comprises one pole pair when p is equal to 0.

## Claims

1. Electric machine comprising a radial bearing (10,11) for supporting a shaft of said electric machine, comprising

> a) an inductor (40) having an inductor axle (30), generating a magnetic field having p pole pairs, p being equal to or larger than 1;
> b) a motor/generator armature winding (170) having turns (100) arranged around an armature axis (35), magnetically coupled to said magnetic field, and connected to a source in such a manner that a torque is produced when a current is fed into said motor/generator armature winding (170) when said electric machine is a motor or connected to a load in such a manner that a current is produced in said load when said inductor is rotated, when said electric machine is a generator;
> c) a bearing armature winding (70) having turns (100) disposed around said armature axis (35), magnetically coupled to said magnetic field, and connected in a closed circuit in such a manner that the net flux variation intercepted by said armature winding (70) when said inductor (40) and said armature winding (70) are in rotation with respect to each other is zero when said inductor axle (30) and said armature axis (35) coincide and is different from zero when said inductor axle (30) and axis (35) do not coincide;
> d) a gap (50) between said inductor (40) and said winding (70); **characterized in that** said bearing armature winding (70) comprises p-1 or p+1 pole pairs..

**2.** Electric machine according to claim 1, **characterized in that** said inductor (40) is internal to said bearing armature winding (70) and said bearing armature winding (70) comprises p+1 pole pairs.

**3.** Electric machine according to claim 1, **characterized in that** said inductor (40) is external to said bearing armature winding (70) and said bearing armature winding (70) comprises p-1 pole pairs.

**4.** Electric machine according to any of preceding claims, **characterized in that** said motor armature winding (170) has p pairs of poles and is disposed along a cylinder around said armature axis (35).

**5.** Electric machine according to any of preceding claims, **characterized in that** said motor armature winding (170) extends axially along a first portion (171) of said armature axis (35) and said bearing armature winding (70) extends along a second portion (72) of said armature axis (35), said first and second portion having at least a partial overlap.

**6.** Electric machine according to claim 5, **characterized in that** said bearing armature winding (170) comprises two or more sections (71, 71'...) extending along said second portion (72) of said armature axis (35) where vibration antinodes and/or displacements may occur when said inductor axle (30) is in rotation.

**7.** Electric machine according to any of claims 5 to 6, **characterized in that** said first portion and said second portion coincide.

**8.** Electric machine according to any of claims 1 to 7, **characterized in that** said inductor has one pole pair (p=1), said bearing armature winding (70) is a lap winding and has two pole pairs (q=2), said motor/generator armature winding (170) being formed by the coils of said bearing armature winding by adding a start connector Rs to the first turn of a first coil and a finish connector $R_F$ to the first turn of a second coil of the bearing armature winding 70, said first coil being located at 180°of said second coil, said start connector Rs and finish connector $R_F$ being connected to a load or source.

**9.** Electric machine according to any of claims 1 to 7, **characterized in that** said inductor has two pole pairs (p=2), said bearing armature winding (70) is a lap winding and has one pole pairs (q=1) comprising two coils connected successively in antiseries, said motor/generator armature winding (170) being formed by the coils of said bearing armature winding by adding a start connector Rs to the first turn of a first coil and a finish connector $R_F$ to the last turn of a second coil of the bearing armature winding 70, said first coil being located at 180°of said second coil, said start connector Rs and finish connector $R_F$ being connected to a load or source.

**10.** Electric machine according to any of claims 1 to 7, **characterized in that** said inductor has two pole pairs (p=2), said bearing armature winding (70) is a lap winding and has one pole pairs (q=1) comprising four coils connected successively in series, antiseries, series, antiseries, said motor/generator armature winding (170) being formed by the coils of said bearing armature winding by adding a start connector Rs to a conductor (271) connecting two coils connected in series, and a finish connector $R_F$ to a conductor (272) connecting the two other coils connected in series of the bearing armature winding 70, said start connector Rs and finish connector $R_F$ being connected to a load or source.

**11.** Electric machine according to any of preceding claims, **characterized in that** said rotor is embedded in a cylindrical sleeve (120).

**12.** Electric machine according to any of claims 1 to 11, **characterized in that** said bearing armature winding comprises two sections (71, 71 ") located at both ends of said second portion.

**13.** Electric machine according to any of claims 1 to 11, **characterized in that** said bearing armature winding comprises three sections (71, 71', 71 ") located at both ends of said second portion and in the middle of said section.

111      111      110      110

Fig. 1a-d

40

S

30

N

Fig. 2

Fig. 3a

Fig. 3b

70

40

τ

180°

N                    S

110

B

0                                    2π

# Fig. 3c

170

40

τ

N                    S

$R_S$        $R_F$

B

0                                    2π

# Fig. 4a

Fig. 4b

Fig. 4c

Fig. 5

Fig. 6a

70

τ    60°

110

N    S    N    S

B

0    2π

Fig. 6b

τ    110

N    S    N    S

B

0    2π

Fig. 7a

Fig7b

Fig. 7c

170

## Fig. 8a

170

## Fig. 8b

270

$\tau$

180°

N

S

$I_{R,2}$  $I_{R,1}$

$I_R$

$R_S$

$R_F$

Fig 9a

270

$\tau$

180°

N   S

N   S

$I_{R,1}$

$I_{R,2}$

$I_R$

$R_S$

$R_F$

Fig. 9b

270

271

272

$R_F$

$R_S$

$\tau$

90°

N    S    N    S

**Fig. 9c**

$I_{R,1}$    $I_{R,2}$

$E_d$    $E_0$    $I_R$    $E_0$    $E_d$

$L$    $L$

$U_R$

$R$    $R$

**Fig. 10**

Fig. 11 a-f

70    50
      30
                                          120

Fig. 12a                                  40
                                          120
                                          74

140                                       130

Fig. 12b

71
71'    Fig. 12c    71''

Europäisches
Patentamt

European
Patent Office

Office européen
des brevets

# EUROPEAN SEARCH REPORT

Application Number

EP 15 17 7331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 694 041 A (STUDER PHILIP A) 26 September 1972 (1972-09-26) * abstract; figures * * column 3, line 28 - column 4, line 32 * ----- | 1-13 | INV. H02K7/09 F16C32/04 ADD. H02K3/28 |
| X | US 6 320 290 B1 (KANEBAKO HIDEKI [JP] ET AL) 20 November 2001 (2001-11-20) * abstract; figures * ----- | 1-13 | |
| X | WO 02/07289 A2 (AMRHEIN WOLFGANG [AT]; SILBER SIEGFRIED [AT]) 24 January 2002 (2002-01-24) * abstract; figures * * page 1, paragraph 4 * ----- | 1-13 | |
| X | JP H10 84654 A (EBARA CORP) 31 March 1998 (1998-03-31) * abstract; figures * ----- | 1-13 | |
| X | JP 2001 103688 A (EBARA CORP) 13 April 2001 (2001-04-13) * abstract; figures * ----- | 1-13 | TECHNICAL FIELDS SEARCHED (IPC) |
| X | EP 2 537 702 A1 (VALEO SYS CONTROLE MOTEUR SAS [FR]) 26 December 2012 (2012-12-26) * abstract; figures * ----- | 1-13 | H02K F16C |

The present search report has been drawn up for all claims

| Place of search | Date of completion of the search | Examiner |
|---|---|---|
| The Hague | 4 January 2016 | Ramos, Horacio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 7331

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2016

| Patent document cited in search report | | Publication date | Patent family member(s) | | Publication date |
|---|---|---|---|---|---|
| US 3694041 | A | 26-09-1972 | NONE | | |
| US 6320290 | B1 | 20-11-2001 | DE | 10040383 A1 | 02-08-2001 |
| | | | JP | 2001078389 A | 23-03-2001 |
| | | | KR | 20010030054 A | 16-04-2001 |
| | | | US | 6320290 B1 | 20-11-2001 |
| WO 0207289 | A2 | 24-01-2002 | AT | 469456 T | 15-06-2010 |
| | | | AU | 7566101 A | 30-01-2002 |
| | | | CN | 1443391 A | 17-09-2003 |
| | | | DE | 10034662 A1 | 24-01-2002 |
| | | | EP | 1301979 A2 | 16-04-2003 |
| | | | JP | 5192629 B2 | 08-05-2013 |
| | | | JP | 2004504795 A | 12-02-2004 |
| | | | KR | 20030022281 A | 15-03-2003 |
| | | | US | 2004090138 A1 | 13-05-2004 |
| | | | WO | 0207289 A2 | 24-01-2002 |
| JP H1084654 | A | 31-03-1998 | NONE | | |
| JP 2001103688 | A | 13-04-2001 | NONE | | |
| EP 2537702 | A1 | 26-12-2012 | CN | 102842997 A | 26-12-2012 |
| | | | EP | 2537702 A1 | 26-12-2012 |
| | | | FR | 2977091 A1 | 28-12-2012 |
| | | | JP | 2013009586 A | 10-01-2013 |
| | | | KR | 20130001149 A | 03-01-2013 |
| | | | US | 2012326666 A1 | 27-12-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2677176 A
- US 20120068558 A
- WO 2014013147 A
- WO 2013110608 A
- WO 2015024830 A
- WO 03021121 A